# EUROPEAN PATENT SPECIFICATION

(11) **EP 1 265 707 B1**
(45) Date of publication and mention of the grant of the patent: **05.11.2003**
(21) Application number: 01911934.6
(22) Date of filing: 15.03.2001
(51) Int. Cl.: B01L 1/04, B25J 21/02, F24F 3/16

(54) **CABINETS FOR HANDLING TOXIC OR STERILE MATERIALS**
KAMMER ZUR HANDHABUNG GIFTIGER ODER STERILER STOFFE
ENCEINTES DE MANIPULATION DE MATERIAUX TOXIQUES OU STERILES

(30) Priority: 21.03.2000 GB 0006820
(43) Date of publication of application: 18.12.2002
(73) Proprietor: Bioquell UK Limited, Andover, Hampshire SP10 5AA (GB)
(72) Inventor: DRINKWATER, James Lindsay, Aylesbury, Buckinghamshire HP18 0BA (GB)
(74) Representative: Bayliss, Geoffrey Cyril
(86) International application number: GB0101146
(87) International publication number: WO01070398

(56) References cited:
- WO-A-90/05549
- GB-A- 2 286 986
- US-A- 4 177 718
- US-A- 5 316 560

## Description

This invention relates to cabinets for handling toxic or sterile materials.

There has for some time been a dilemma in the handling of sterile or toxic materials in contained facilities. The normal practice in the U.K. has been to place such materials in a negative pressure enclosure. This has the advantage of ensuring that any leakage in the chamber would be inwards, thus containing the toxic material. This approach met with the approval of safety officers and authorities but may compromise the sterility of the product.

The risk to sterility is considered to be of importance for such products as chemotherapy drugs, where a non-sterile product would put at risk the patient. To eliminate the potential of contaminating the product during handling in the containment system it should be run at positive pressure, so that any leaks would be outwards, thus protecting the product from external contamination. Thus, negative pressure is required to protect the operator and positive pressure is required to protect the product. These types of enclosures are described in a code of practice 1 published by the U.K. Stationary Office. In some European countries, especially France, the risk to the product is considered to be more important than the risk to the operator, so containment systems for sterile toxic materials are generally operated at a small positive pressure. In the U.K. the risk to the operator is considered to be more important. Hence, in the U.K., sterile toxic materials are generally handled under negative pressure.

There are many different types of construction of containment systems, normally called isolators. They will vary in the materials of construction from flexible wall devices manufactured from flexible PVC film to rigid isolators manufactured from stainless steel. The type of construction will depend on the frequency of use and the demands of the process and operators. Isolators also have different types of airflow patterns, which will either be turbulent or laminar flow. Turbulent flow systems are generally cheaper as they do not require the same volume of airflow, and hence the air handling equipment is smaller. Laminar flow isolators are usually more expensive but because of the higher airflow rates will reach the required internal air quality much quicker.

To maintain cleanliness inside an isolator the air is filtered both as it enters and as it leaves. For isolators that are to be used for sterile manipulations the air is generally filtered twice before entering the chamber, and only once prior to leaving the chamber. The filtration technique is changed for isolators that are used for the handling of toxic material, by using a single filter on entry and a double filter at the exit.

WO 90/05549 discloses a clean air cabinet having a fan arrangment for delivering sterile air vertically down through the cabinet to a work region towards the lower end of the cabinet, the air flowing horizontally when it reaches the lower end of cabinet before passing through controlled outlets. Operator gloves or half suits are provided projecting into the cabinet for operators to act on materials on the work surface. The air flows at the bottom of the cabinet extend over the half suit and gloves so that any leaks in the cabinet at those regions could expose the operators to any toxic material carried in the air flow from the work surface.

An object of the invention is to maximise the risk. to the operator in toxic materials in a positive pressure cabinet.

This invention provides a closed cabinet for toxic or sterile material having a work station within the cabinet to receive toxic or sterile material, means to enable an operator outside of the cabinet to conduct contactless operations on the material from one side of the cabinet, means to provide a flow of filtered air through the cabinet at an elevated pressure above ambient to prevent ingress of contaminant material to the cabinet, and air flow direction means within the cabinet to cause said pressurised air to flow over the work station; wherein said air flow direction means is arranged to direct air flow across the cabinet over said work station in a direction away from that side of the cabinet from which the operator functions to protect the operator from exposure to toxic material.

The arrangement according to the invention can be regarded as a complex laminar flow device, in which the direction of the laminar airflow is changed inside the chamber. It is, perhaps, more accurate to describe the airflow as unidirectional at any one point in space inside the isolator. The description of unidirectional, where applied to airflow implies that the air is travelling in the same direction, but not necessarily all of the air is travelling at the same velocity. Truly laminar airflow is not only unidirectional, but will also have the same velocity at all points in a cross-section of the flow.

By generating a unidirectional flow of filtered air from the top of the Isolator in a downwards direction; at an average velocity of between 0.1 and 0.3 m/sec, the air within the Isolator will be changed very frequently, and hence any airborne particles will be swept away.

Normally, in prior art cabinets it would be expected that the air would be extracted from or near the base of the Isolator, thus maintaining the near laminar flow until the air reaches the base of the Isolator.

Such cabinets may be operated at either positive or negative pressure, and will usually have gloves that penetrate a window in the front face of the cabinet for the operator to conduct manipulation of the materials at the work station inside the cabinet.

The present device places the extract of the air from the cabinet, not in the base, but in the rear wall. The air is then extracted through filters placed in the rear wall. Deflector vanes are placed inside the chamber to ensure that the airflow patterns are correct. One deflector vane is placed in the top of the chamber to ensure that the air moves down the front of the chamber and then across the base. A second vane is placed at the rear to prevent the air taking the shortest route from the top to the rear filter.

This arrangement of having the air delivered to the cabinet at the top, and extracted at the rear, causes the air to be swept to the rear of the chamber at the working zone. The air movement at the working zone towards the rear of the Isolator, ensures that any material is swept away from the operator, protecting him/her by the movement of the air, whilst the product remains protected by the positive pressure.

With the type of airflow patterns described it is important that the internal chamber pressure is maintained at a low level of about 35 Pascals. This is most easily achieved by using a two-fan system, one fan supplying air and one extracting air. Such "push-pull" systems require dynamic control and are balanced by using one to control the pressure and the other to control the flow. The fan controlling the pressure is made to react quickly to any change while the fan controlling flow reacts only slowly. This difference in reaction time ensures that the fans do not unbalance each other.

Because of the critical nature of any leaks an automatic test facility has been built into the program. This performs a leak test on the whole system prior to the commencement of any work, and will not allow work to start until a satisfactory leak test has been completed.

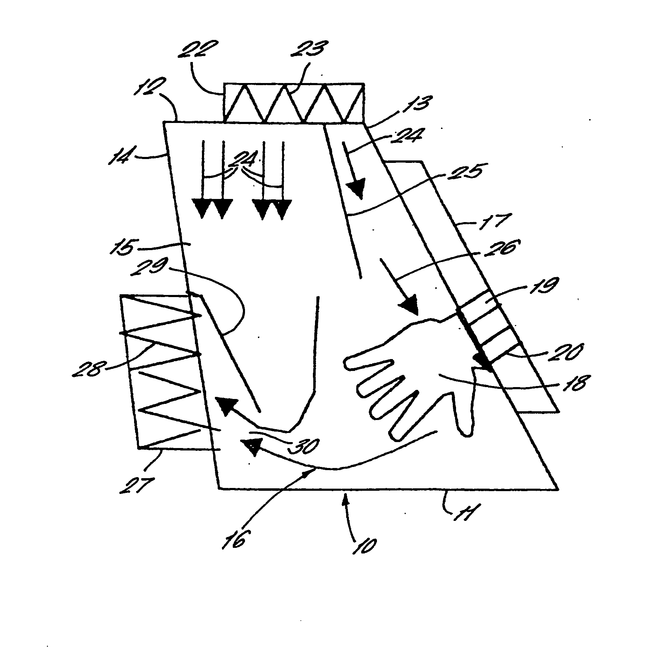

The following is a description of a specific embodiment of the invention, reference being made to the accompanying drawing which is a diagrammatic view of a cabinet or isolator for the handling of toxic or sterile material.

Referring to the drawing, there is shown a cabinet for isolator indicated generally at 10 for handling toxic or sterile materials. The cabinet has a base wall 11, top wall 12, inclined front wall 13, back wall 14 and side walls 15. A work station indicated generally at 16 is provided above the bottom wall 11 where toxic or sterile materials are supported

Front wall 13 of the cabinet has a window 17 for an operator to view the materials at the work station and has gloves 18, the cuffs 19 of which are mounted in ports 20 in the window. The gloves project into the cabinet behind the window for an operator to use to manipulate the materials of the work station without direct contact therewith.

A pump or pumps (not shown) of conventional construction are provided for delivering an airflow to the top of the cabinet. Air enters the cabinet through a port 22 in which a high efficiency particulate air filter 23 is mounted having an efficiency of at least 99.997% when tested in accordance with British Standard 3928. Other grades and deficiencies of a filter may be used according to the type of containment required. Filtered air flows downwardly from the inlet in the directions of the arrows 24.

An air deflector 25 is mounted on the underside of the top wall of the cabinet to deflect a flow of air downwardly over the inclined front wall of the cabinet as indicated by the arrows 26. The rear wall of the cabinet has an outlet port 27 towards the lower end thereof in which a further high efficiency particulate air filter 28 is mounted to filter air exiting from the cabinet. A second air deflector 29 is mounted on the inside of the rear wall of the cabinet to extend from the upper end of the outlet port diverging away from the port towards the bottom of the cabinet to provide an entry indicated at 30 to the outlet port which is open towards the bottom of the cabinet. Air flowing downwardly from the inlet port in the direction of the arrows 26 over the front window of the cabinet passes over the operator gloves and thence turns as it reaches the lower part of the cabinet to flow towards the rear of the cabinet over the work station and through the entry 30 to the outlet port 27. The positioning of the inlet and outlet ports coupled with the air deflectors thus ensures that there is a stream of air moving through the cabinet away from the front wall of the cabinet from where the operator views and acts on the contents of the cabinet at the work station. The air patterns created thus ensure that airborne material generated in the working zone is swept away from the operator keeping him safe from contamination whilst the project is projected by the position pressure of the air.

The pump or pumps provided air flow through the cabinet are controlled conventionally to maintain the required pressure balance in the cabinet.

As indicated earlier, the cabinet or isolator may be used for either toxic or sterile materials.

The air patterns thus ensures that air borne material generated in the working zone is swept away from the operator keeping him safe from contamination, whilst the product is protected by the positive pressure.

It will be appreciated that many modifications may be made without departing from the scope of the invention. For example, the apparatus may be used for handling sterile material instead of toxic materials.

## Claims

1. A closed cabinet for toxic or sterile material having a work station (9) within the cabinet to receive toxic or sterile material, means (18) to enable an operator outside of the cabinet to conduct contactless operations on the material from one side (13) of the cabinet, means (22, 23) to provide a flow of filtered air through the cabinet at an elevated pressure above ambient to prevent ingress of contaminant material to the cabinet, and air flow direction means (25, 29) within the cabinet to cause said pressurised air to flow over the work station; **characterised in that** said air flow direction means is arranged to direct air flow across the cabinet over said work station in a direction away from that side (13) of the cabinet from which the operator functions to protect the operator from exposure to toxic material.

2. A cabinet as claimed in claim 1, **characterised in that** the cabinet has a viewing window (17) for the operator on one side (13) thereof to view the sterile or toxic material at the work station (9).

3. A cabinet as claimed in claim 1 or claim 2, **characterised in that** the means to enable the operator to perform contactless operations on the sterile or toxic material comprise isolator gloves (18) mounted on the window side (13) of the cabinet for access by the operator to the sterile or toxic material.

4. A cabinet as claimed in any of the preceding claims, having an inlet (22) to receive filtered air at the upper end of the cabinet to direct the stream of air downwardly over the operator side of the cabinet to the work station (9) and an outlet (27) from the cabinet on the opposite side of the work station to the operator side for exhaust of air from the cabinet and baffle means (25, 29) in the cabinet to direct at least a proportion of the air flow from the inlet downwardly over the operator side of the cabinet to the work station and baffle means extending over an upper part of the exhaust outlet (27) to prevent air flow directly from the inlet to the outlet to cause the air flow to pass from the operator side of the cabinet across the work station and hence through the outlet.

5. A cabinet as claimed in claim 4, **characterised in that** both inlet and outlet to the cabinet have filters (23, 28) to prevent ingress of contaminants and prevent release of sterile or toxic material from the cabinet.

## Patentansprüche

1. Geschlossene Kammer für toxische oder sterile Materialien, welche folgendes aufweist: eine Arbeitststation (9) innerhalb des Gehäuses zur Aufnahme toxischen oder sterilen Materials; Mittel (18), um einen Benutzer außerhalb des Gehäuses in die Lage zu versetzen, kontaktlose Arbeiten an dem Material von einer Seite (13) des Gehäuses durchzuführen; Mittel (22, 23), um einen Strom gefilterter Luft durch das Gehäuse unter erhöhtem Druck gegenüber der Umgebung zur Verfügung zu stellen, um den Eintritt von kontaminiertem Matierial in die Kammer zu verhindern; und Luftströmungsrichtungsmittel (25, 29) innerhalb des Gehäuses, um die besagte Druckluft über die Arbeitsstation fließen zu lassen;
**dadurch gekennzeichnet, dass** die besagten Luftströmungsrichtungsmittel angeordnet sind, um den Luftstrom durch die Kammer über die besagte Arbeitsstation in eine Richtung, weg von der Seite (13) des Gehäuses zu steuern, auf welcher der Benutzer arbeitet, um den Benutzer davor zu schützen, toxischem Material ausgesetzt zu werden.

2. Kammer nach Anspruch 1, **dadurch gekennzeichnet dass** die Kammer auf einer Seite (13) ein Sichtfenster (17) für den Benutzer aufweist, um das sterile oder toxische Material in der Arbeitsstation (9) zu sehen .

3. Kammer nach Anspruch 1 oder 2, **dadurch gekennzeichnet dass** die Mittel, welche es dem Benutzer ermöglichen, kontaktlose Arbeiten an dem sterilen oder toxischen Material durchzuführen, Isolatorhandschuhe (18) aufweisen, die an der Fensterseite (13) der Kammer befestigt sind, um dem Benutzer Zugang zu dem sterilen oder toxischen Material zu ermöglichen.

4. Kammer nach einem der vorangegangenen Ansprüche, mit einem Einlass (22), um gefilterte Luft am oberen Ende des Gehäuses aufzunehmen, um den Luftstrom nach unten über die Benutzerseite der Kammer zur Arbeitsstation (9) zu leiten, und mit einem Auslass (27) aus der Kammer auf der, der Benutzerseite gegenüberliegenden Seite der Arbeitsstation zum Ausströmen von Luft aus dem Gehäuse und mit Leitmitteln (25, 29) in der Kammer, um zumindest einen Teil des Luftstroms vom Einlass nach unten über die Benutzerseite der Kammer zur Arbeitsstation zu leiten, und mit Leitmitteln, die sich über einen oberen Teil des Auslasses (27) erstrecken, um eine Luftströmung direkt vom Einlass zum Auslass zu verhindern, um den Luftstrom dazu zu bringen, von der Benutzerseite des Gehäuses über die Arbeitsstation und folglich durch den Auslass zu strömen.

5. Kammer nach Anspruch 4, **dadurch gekennzeichnet dass** sowohl Einlass als auch Auslass der Kammer über Filter verfügen (23,28), um den Eintritt von Fremdstoffen und das Entweichen von sterilem oder toxischem Material aus dem Gehäuse zu verhindern.

## Revendications

1. Enceinte fermée pour des matériaux toxiques ou stériles, possédant une station de travail (9) à l'intérieur de l'enceinte pour recevoir les matériaux toxiques ou stériles, des moyens (18) pour permettre à un opérateur situé à l'extérieur du meuble de conduire des opérations à distance sur les matériaux à partir d'un côté (13) du meuble, des moyens (22, 23) pour fournir un flux d'air filtré à travers l'enceinte à une pression supérieure à l'air ambiant de façon à empêcher l'entrée de matériaux contaminant dans l'enceinte, des moyens de direction pour le flux d'air (25, 29) à l'intérieur du meuble pour faire circuler ledit air sous pression jusqu'à la station de travail ;
**caractérisée en ce que** lesdits moyens de direction pour le flux d'air sont disposés de façon à diriger le flux d'air à travers le meuble jusqu'à ladite station de travail dans un sens qui s'éloigne de ce côté (1) de l'enceinte à partir duquel l'opérateur opère afin de protéger l'opérateur des expositions aux matériaux toxiques.

2. Enceinte selon la revendication 1, **caractérisée en ce que** l'enceinte possède une fenêtre de vue (17) pour l'opérateur sur un côté (13) de celle-ci destinée à voir les matériaux stériles ou toxiques au niveau de la station de travail (9).

3. Enceinte selon la revendication 1 ou 2, **caractérisée en ce que** les moyens destinés à permettre à l'opérateur d'effectuer des opérations à distance sur les matériaux stériles ou toxiques comprennent des gants isolants (18) montés sur le côté de la fenêtre (13) de l'enceinte pour l'accès par l'opérateur aux matériaux stériles ou toxiques.

4. Enceinte selon l'une quelconque des revendications précédentes, possédant une admission (22) pour recevoir de l'air filtré au niveau de l'extrémité supérieure de l'enceinte, destinée à diriger le flux d'air vers le bas pour aller vers la station de travail (9) jusqu'à l'opérateur, et une sortie (27) de l'enceinte sur le côté opposé de la station de travail vers le côté de l'opérateur pour l'échappement de l'air depuis l'enceinte, et des moyens de cloison (25, 29) dans l'enceinte pour diriger vers le bas au moins une partie du flux d'air provenant de l'admission vers la station de travail jusqu'au côté de l'opérateur de l'enceinte, et des moyens de cloison s'étendant sur une partie supérieure de la sortie d'échappement (27) pour empêcher un flux d'air allant directement de l'admission à la sortie de façon à provoquer le passage du flux d'air depuis le côté de l'opérateur de l'enceinte à travers la station de travail et alors à travers la sortie.

5. Enceinte selon la revendication 4, **caractérisée en ce que** l'admission ainsi que la sortie de l'enceinte possèdent des filtres (23, 28) pour empêcher l'entrée de substances contaminantes et pour empêcher la libération des matériaux stériles ou toxiques hors de l'enceinte.
